# EUROPEAN PATENT SPECIFICATION

(11) **EP 3 539 811 B1**
(45) Date of publication and mention of the grant of the patent: **21.04.2021**
(21) Application number: 18182869.0
(22) Date of filing: 11.07.2018
(51) Int. Cl.: B60K 15/03, B60K 15/063, B60K 15/067, B60R 11/00

(54) **VEHICLE HAVING A TANK HOLDING DEVICE**
FAHRZEUG MIT EINER TANKHALTEVORRICHTUNG
VÉHICULE COMPRENANT UN DISPOSITIF DE RETENUE DE RÉSERVOIR

(30) Priority: 16.03.2018 US 201815923600
(43) Date of publication of application: 18.09.2019
(73) Proprietor: Kwang Yang Motor Co., Ltd., Kaohsiung City 807 (TW)
(72) Inventor: Chuang-Hsiung, Lin, Kaohsiung City 830 (TW); Teruaki, Yamamoto, Kobe-shi 6508670 (JP)
(74) Representative: Cohausz & Florack

(56) References cited:
- JP-A- 2004 203 200
- US-A1- 2015 367 726
- US-B2- 7 658 414
- US-B2- 9 499 045

## Description

The disclosure relates to a vehicle, and more particularly to a tank holding device in a vehicle.

A utility vehicle is a slow, but multipurpose vehicle that is commonly driven to transport passengers or goods in a simple environment, such as a golf course or a factory. Most of the utility vehicles utilize traditional gasoline-powered system, where the gasoline is transferred from an external tank.

US 9,499,045 B2 discloses a working vehicle comprising: a fuel tank; a tank support member conf igured to receive and support the fuel tank from below; and an inverse U-shaped hood support member provided upright in a state of spanning left and right of the fuel tank, the hood support member including an elastic member that acts on an upper portion side of the fuel tank so as to hold the fuel tank at a predetermined position on the tank support member.

JP 2004 203200 A discloses a fuel-tank support structure which can suppress effectively that the flow sound made when the fuel in a fuel tank flows is transmitted from a vehicle-body floor into a compartment.

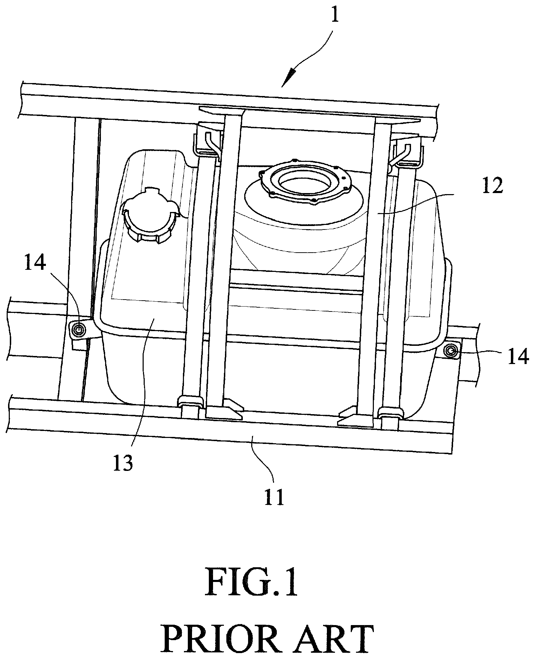

Referring to FIG. 1, a vehicle frame 1 of a conventional utility vehicle includes a mounting frame 11, a holding frame 12 that is attached to the mounting frame 11, a tank 13 that is disposed between the mounting frame 11 and the holding frame 12, and a pair of screws 14 that secure the tank 13 directly onto the mounting frame 11 through their respective through holes. While the mounting frame 11 and the holding frame 12 confine the tank 13 therebetween, the holding frame 12 serves no role in holding the tank 13 in place. In other words, without a buffer system, stress exerted by the tank 13 due to external lateral movement (e.g. sudden bump in driving) is all concentrated toward the screws 14, which can easily damage the screws 14 and the through holes, or even damage the tank 13. In addition, the tank 13 may be made with different configurations, which may come with misaligned through holes incapable to fit the screws 14 therethrough for securing the tank 13 onto the mounting frame 11.

Therefore, an object of the disclosure is to provide a vehicle having a tank holding device that can alleviate at least one of the drawbacks of the prior art.

Other features and advantages of the disclosure will become apparent in the following detailed description of the embodiments with reference to the accompanying drawings, of which:
FIG. 1 is a fragmentary perspective view of a conventional tank holding device in a vehicle frame;
FIG. 2 is a top view of an embodiment of a vehicle according to the disclosure;
FIG. 3 is a partly fragmentary, exploded perspective view of a tank holding device of the embodiment;
FIG. 4 is a partly fragmentary, assembled perspective view of the embodiment;
FIG. 5 is a fragmentary sectional view of the embodiment; and
FIG. 6 is a partly exploded sectional view of a cushion member, a coupling member, a nut and a threaded member of the embodiment.

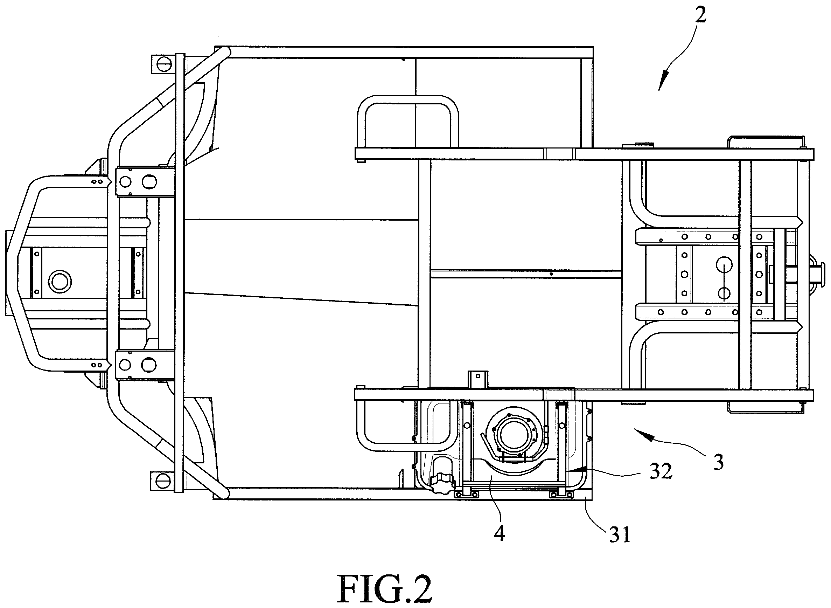

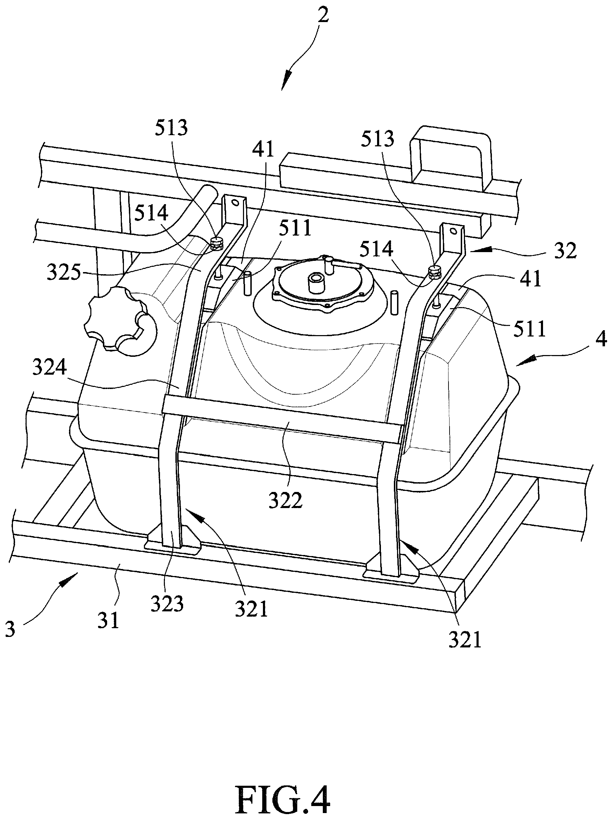

Referring to FIGS. 2 to 4, an embodiment of the vehicle 2 according to the disclosure includes a vehicle frame 3, a tank 4 disposed on the vehicle frame 3, and a tank holding device 5 disposed on the vehicle frame 3 for securing the tank 4 thereon. In this embodiment, the tank 4 is disposed on either left or right side of the vehicle frame 3, but it may be disposed elsewhere in other embodiments.

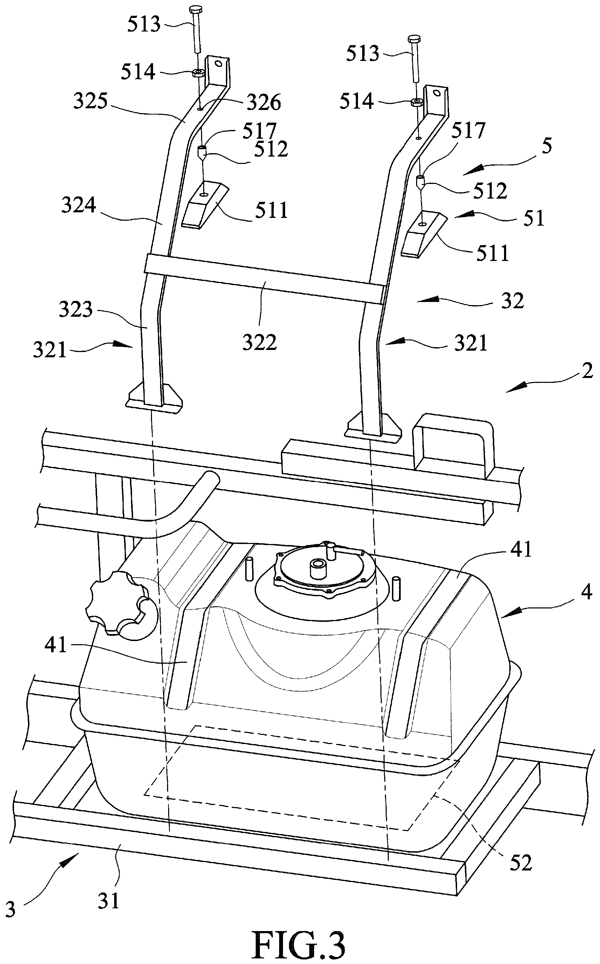

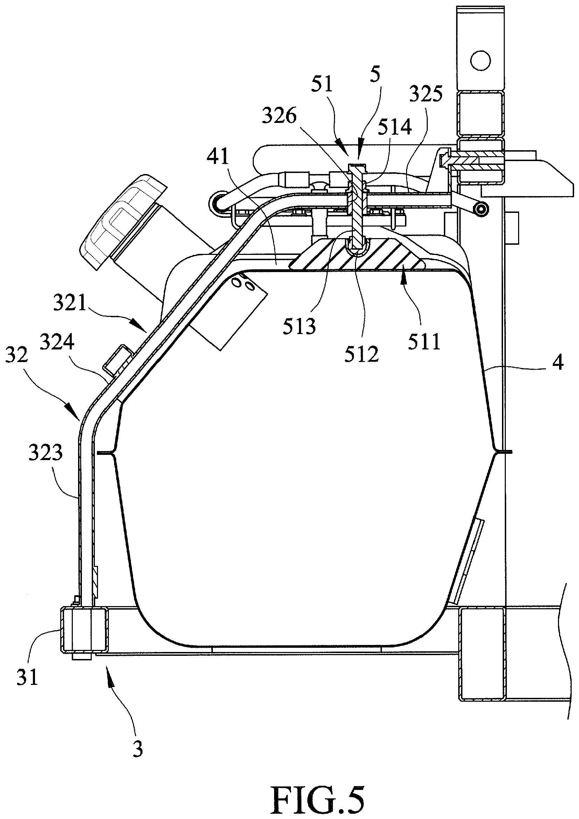

Referring to FIGS. 3 to 5, the vehicle frame 3 includes a mounting frame 31 and a holding frame 32 disposed on the mounting frame 31. The holding frame 32 has a plurality of spaced-apart support segments 321 connected fixedly to the mounting frame 31, and a connecting segment 322 interconnecting the support segments 321. Each of the support segments 321 has a lower support part 323 that is secured to a lower portion of the mounting frame 31, an inclined part 324 that extends obliquely from the lower support part 323 and that is connected to the connecting segment 322, and an upper support part 325 that extends substantially horizontally from the inclined part 324, and that is secured to an upper portion of the mounting frame 31. The upper support part 325 of each of the support segments 321 is formed with a threaded hole 326. In this embodiment, the threaded hole 326 extends substantially vertically in the upper support part 325, but it may extend diagonally in other embodiments. The tank 4 is disposed between the mounting frame 31 and the holding frame 32, and is formed with a plurality of horizontally spaced-apart retaining grooves 41 retaining respectively the inclined parts 324 of the support segments 321. While the above configuration allows the support segments 321 to confine the tank 4 from horizontal movement, the upper support parts 325 of the support segments 321 are actually disposed above the tank 4 and does not fit into the retaining groove 41 directly.

The tank holding device 5 includes a positioning unit 51 that is connected to the holding frame 32 of the vehicle frame 3, and a shock absorbing unit 52 disposed between the mounting frame 31 and the tank 4. The shock absorbing unit 52 is made of soft material, such as rubber or foam, for absorbing shock impulses from the vehicle frame 3 to the tank 4. In the embodiment, the positioning unit 51 is adapted to extent threadedly through the holding frame 32, and has two cushion members 511, two coupling members 512, two threaded members 513 and two nuts 514. Each of the cushion members 511 is disposed between the tank 4 and the upper support part 325 of a respective one of the support segments 321 of the holding frame 32, and is retained by a respective one of the retaining grooves 41. The coupling members 512 abut respectively against the cushion members 511 and are disposed between the cushion members 511 and the holding frame 32. Each of the threaded members 513 extends threadedly through the threaded hole 326 of the upper support part 325 of a respective one of the support segments 321 to be connected to the holding frame 32. The nuts 514 are disposed on the holding frame 32, and are connected threadedly and respectively to the threaded members 513.

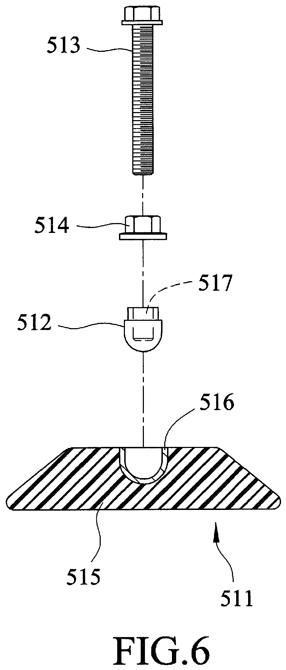

The configuration of each of the cushion members 511 being retained by a respective one of the retaining grooves 41 prevents the respective cushion members 511 from sliding. As shown in FIG. 6, each of the cushion members 511 has a main portion 515 that is made of rubber, and an abutment portion 516 that is embedded in a top end of the main portion 515 and that defines a receiving space receiving a respective one of the coupling members 512. The abutment portion 516 is made from a hard material such as iron and is made with the main portion 515 as one piece. Each of the coupling members 512 is disposed between a respective one of the cushion members 511 and the upper support part 325 of a respective one of the support segments 321, and has an end formed with a threaded engaging hole 517 (see FIG. 3) that is engaged threadedly with a respective one of the threaded members 513, and an opposite end abutting against the abutment portion 516 of a respective one of the cushion members 511. The abutment portions 516 disperse external force from the coupling members 512 equally throughout the main portions 515 to extend the service life of the main portions 515. Each of the threaded members 513 has two opposite ends, each of which is on opposite sides of the upper support part 325 of a respective one of the support segments 321. The lower end of each of the threaded members 513 engages threadedly with the threaded engaging hole 517 of a respective one of the coupling members 512. Each of the nuts 514 is disposed on the top side of the upper support part 325 of a respective one of the support segments 321, and each of the coupling members 512 is disposed on the bottom side of the upper support part 325 of a respective one of the support segments 321.

When either of the threaded members 513 is adjusted, it is threadedly moved upward or downward to pull or push a respective one of the coupling members 512, which in terms releases or exerts force toward a respective one of the cushion members 511 against the tank 4. As such, the threaded member 513 is adapted for pushing a respective one of the cushion members 511 tightly against the tank 4 to secure the tank 4 from any movement. After the adjustment, each of the threaded members 513 may be further secured by threadedly engaging the respective nuts 514 thereto against the respective upper support parts 325. Due to bigger contact area between the cushion members 511 and the tank 4, exerted force between the two elements is better dispersed throughout to prevent damage to the structure of the tank 4 or the tank holding device 5. The abovementioned adjusting configuration of the threaded members 513 may accommodate uses of tanks of different dimensions to improve the compatibility of the tank holding device 5. For each of the positioning units 51, outer surface area of the coupling member 512 is greater than surface area of the threaded member 513 in direct contact with the coupling member 512, such that axial force exerted from the threaded member 513 to the cushion member 511 may be equally dispersed over a larger surface area, creating an overall smaller pressure suitable for extending service life of the cushion member 511.

In the description above, for the purposes of explanation, numerous specific details have been set forth in order to provide a thorough understanding of the embodiments. It will be apparent, however, to one skilled in the art, that various modifications are possible within the scope of the invention as defined by the appended claims.

## Claims

1. A vehicle (2) including:
a vehicle frame (3) including a mounting frame (31), and a holding frame (32) that is disposed on said mounting frame (31);
a tank (4) disposed between said mounting frame (31) and said holding frame (32); and
a tank holding device (5) including a positioning unit (51) that is connected to the holding frame (32), and that is for pushing the tank (4) tightly against the mounting frame (31) so as to secure the tank (4) on the mounting frame (31), said positioning unit (51) includes:
a plurality of cushion members (511) disposed between the holding frame (32) and the tank (4);
a plurality of threaded members (513) connected to the holding frame (32), each of said threaded members (513) being connected threadedly to one of the holding frame (32) and a respective one of said cushion member (511), and being used for pushing the respective one of said cushion members (511) tightly against the tank (4);
**characterized in that** the positioning unit (51) further includes:
a plurality of nuts (514) disposed on the holding frame (32), and connected threadedly and respectively to said threaded members (513); and
a plurality of coupling members (512) connected respectively to said threaded members (513) and abutting respectively against said cushion members (511), each of said coupling members (512) having an end formed with a threaded engaging hole (517) that is engaged threadedly with a respective one of said threaded members (513), and an opposite end abutting against a respective one of said cushion members (511);
wherein each of said cushion members (511) has:
a main portion (515) that is made of rubber; and
an abutment portion (516) that is made of iron, that is embedded in a top end of said main portion (515), and that defines a receiving space receiving a respective one of said coupling members (512).

2. The vehicle (2) as claimed in claim 1, further **characterized in that** said positioning unit (51) extends threadedly through the holding frame (32).

3. The vehicle (2) as claimed in any one of claims 1 and 2, further **characterized by** a shock absorbing unit (52) disposed between the mounting frame (31) and the tank (4).

4. The vehicle (2) as claimed in any one of claims 1 to 34, further **characterized in that** said tank (4) is formed with a plurality of retaining grooves (41) retaining respectively said cushion members (511) .

5. The vehicle (2) as claimed in claim 4, further **characterized in that** said holding frame (32) has:
a plurality of spaced-apart support segments (321) connected fixedly to said mounting frame (31), each of said support segments (321) having
a lower support part (323) that is secured to a lower portion of said mounting frame (31),
an inclined part (324) that extends obliquely from said lower support part (323) and that is retained in the respective one of said retaining grooves (41), and
an upper support part (325) that extends substantially horizontally from said inclined part (324), and that is secured to an upper portion of said mounting frame (31); and
a connecting segment (322) interconnecting said support segments (321).

6. The vehicle (2) as claimed in claim 5, further **characterized in that**:
each of said support segments (321) of said holding frame (32) is formed with a threaded hole (326); and
each of said threaded members (513) of said positioning unit (51) extends threadedly through said threaded hole (326) of a respective one of said support segments (321).

## Patentansprüche

1. Ein Fahrzeug (2), aufweisend:
einen Fahrzeugrahmen (3) mit einem Montagerahmen (31) und einem Halterahmen (32), der an dem Montagerahmen (31) angeordnet ist;
einen Tank (4), der zwischen dem Montagerahmen (31) und dem Halterahmen (32) angeordnet ist; und
eine Tankhaltevorrichtung (5) mit einer Positioniereinheit (51), die mit dem Halterahmen (32) verbunden ist und dazu dient, den Tank (4) fest gegen den Montagerahmen (31) zu drücken, um den Tank (4) auf dem Montagerahmen (31) zu befestigen, wobei die Positioniereinheit (51) umfasst:
eine Vielzahl von Dämpferelementen (511), die zwischen dem Halterahmen (32) und dem Tank (4) angeordnet sind;
eine Vielzahl von Gewindeelementen (513), die mit dem Halterahmen (32) verbunden sind, wobei jedes der Gewindeelemente (513) über ein Gewinde mit einem der Halterahmen (32) und einem jeweiligen der Dämpferelemente (511) verbunden ist, und dazu verwendet wird, das jeweilige der Dämpferelemente (511) fest gegen den Tank (4) zu drücken;
**dadurch gekennzeichnet, dass** die Positioniereinheit (51) ferner umfasst:
eine Vielzahl von Muttern (514), die auf dem Halterahmen (32) angeordnet und mit den Gewindeelementen (513) jeweils über ein Gewinde verbunden sind; und
eine Vielzahl von Kopplungselementen (512), die jeweils mit den Gewindeelementen (513) verbunden sind und jeweils an den Dämpferelementen (511) anliegen, wobei jedes der Kopplungselemente (512) ein Ende aufweist, das mit einem Gewindeeingriffsloch (517) ausgebildet ist, das in Gewindeeingriff mit einem jeweiligen der Gewindeelemente (513) steht, und ein gegenüberliegendes Ende, das an einem jeweiligen der Dämpferelemente (511) anliegt;
wobei jedes der Dämpferelemente (511) aufweist:
einen Hauptabschnitt (515), der aus Gummi hergestellt ist; und
einen Anschlagabschnitt (516), der aus Eisen hergestellt ist, der in ein oberes Ende des Hauptabschnitts (515) eingebettet ist, und der einen Aufnahmeraum definiert, der ein jeweiliges der Kopplungselemente (512) aufnimmt.

2. Fahrzeug (2) nach Anspruch 1, ferner **dadurch gekennzeichnet, dass** sich die Positioniereinheit (51) mit einem Gewinde durch den Halterahmen (32) hindurch erstreckt.

3. Fahrzeug (2) nach einem der Ansprüche 1 und 2, ferner **gekennzeichnet durch** eine Stoßdämpfereinheit (52), die zwischen dem Montagerahmen (31) und dem Tank (4) angeordnet ist.

4. Fahrzeug (2) nach einem der Ansprüche 1 bis 3, ferner **dadurch gekennzeichnet, dass** der Tank (4) mit einer Vielzahl von Haltenuten (41) ausgebildet ist, die jeweils die Dämpferelemente (511) halten.

5. Fahrzeug (2) nach Anspruch 4, ferner **dadurch gekennzeichnet, dass** der Halterahmen (32) aufweist:
eine Vielzahl von beabstandeten Stützsegmenten (321), die fest mit dem Montagerahmen (31) verbunden sind, wobei jedes der Stützsegmente (321) aufweist:
ein unteres Stützteil (323), das an einem unteren Abschnitt des Montagerahmens (31)
befestigt ist,
ein geneigtes Teil (324), das sich schräg von dem unteren Stützteil (323) erstreckt, und das in der jeweiligen der Haltenuten (41) gehalten wird, und
ein oberes Stützteil (325), das sich im Wesentlichen horizontal von dem geneigten Teil (324) erstreckt, und das an einem oberen Abschnitt des Montagerahmens (31) befestigt ist; und
ein Verbindungssegment (322), das die Stützsegmente (321) miteinander verbindet.

6. Fahrzeug (2) nach Anspruch 5, ferner **dadurch gekennzeichnet, dass**:
jedes der Stützsegmente (321) des Halterahmens (32) mit einem Gewindeloch (326) ausgebildet ist; und
jedes der Gewindeelemente (513) der Positioniereinheit (51) sich mit einem Gewinde durch das Gewindeloch (326) eines jeweiligen der Stützsegmente (321) erstreckt.

## Revendications

1. Un véhicule (2) comprenant :
un châssis de véhicule (3) comprenant un cadre de montage (31), et un cadre de maintien (32) qui est disposé sur ledit cadre de montage (31) ;
un réservoir (4) disposé entre ledit cadre de montage (31) et ledit cadre de maintien (32) ; et
un dispositif de maintien de réservoir (5) comprenant une unité de positionnement (51) qui est reliée au cadre de maintien (32), et qui est destinée à pousser le réservoir (4) fermement contre le cadre de montage (31) afin de fixer le réservoir (4) sur le cadre de montage (31), ladite unité de positionnement (51) comprend :
une pluralité d'éléments de rembourrage (511) disposés entre le cadre de maintien (32) et le réservoir (4) ;
une pluralité d'éléments filetés (513) connectés au cadre de maintien (32), chacun desdits éléments filetés (513) étant connecté par filetage à l'un du cadre de maintien (32) et à un élément respectif dudit élément de rembourrage (511), et étant utilisé pour pousser l'élément respectif desdits éléments de rembourrage (511) fermement contre le réservoir (4) ;
**caractérisé en ce que** l'unité de positionnement (51) comprend en outre
une pluralité d'écrous (514) disposés sur le cadre de maintien (32), et reliés par filetage et respectivement auxdits éléments filetés (513) ; et
une pluralité d'éléments d'accouplement (512) reliés respectivement auxdits éléments filetés (513) et en butée respectivement contre lesdits éléments de rembourrage (511), chacun desdits éléments d'accouplement (512) ayant une extrémité formée avec un trou d'engagement fileté (517) qui est engagé par filetage avec un élément respectif desdits éléments filetés (513), et une extrémité opposée en butée contre un élément respectif desdits éléments de rembourrage (511) ;
dans lequel chacun desdits éléments de rembourrage (511) a :
une partie principale (515) qui est faite de caoutchouc ; et
une partie de butée (516) qui est faite de fer, qui est encastrée dans une extrémité supérieure de ladite partie principale (515), et qui définit un espace de réception recevant un élément respectif desdits éléments d'accouplement (512).

2. Le véhicule (2) selon la revendication 1, **caractérisé en outre en ce que** ladite unité de positionnement (51) s'étend par filetage à travers le cadre de maintien (32).

3. Le véhicule (2) selon l'une des revendications 1 et 2, **caractérisé en outre par** une unité d'absorption des chocs (52) disposée entre le cadre de montage (31) et le réservoir (4).

4. Le véhicule (2) selon l'une des revendications 1 à 3, **caractérisé en outre en ce que** ledit réservoir (4) est formé avec une pluralité de rainures de retenue (41) retenant respectivement lesdits éléments de rembourrage (511).

5. Le véhicule (2) selon la revendication 4, **caractérisé en outre en ce que** ledit cadre de maintien (32) a :
une pluralité de segments de support (321) espacés les uns des autres et reliés de manière fixe audit cadre de montage (31), chacun desdits segments de support (321) ayant
une partie inférieure de support (323) qui est fixée à une partie inférieure dudit cadre de montage (31),
une partie inclinée (324) qui s'étend obliquement à partir de ladite partie inférieure de support (323) et qui est retenue dans l'une rainure respective desdites rainures de retenue (41), et
une partie supérieure de support (325) qui s'étend essentiellement horizontalement à partir de ladite partie inclinée (324), et qui est fixée à une partie supérieure dudit cadre de montage (31) ; et
un segment de connexion (322) interconnectant lesdits segments de support (321).

6. Le véhicule (2) selon la revendication 5, **caractérisé en outre en ce que** :
chacun desdits segments de support (321) dudit cadre de maintien (32) est formé avec un trou fileté (326) ; et
chacun desdits éléments filetés (513) de ladite unité de positionnement (51) s'étend par filetage à travers ledit trou fileté (326) d'un segment respectif desdits segments de support (321).
